# EUROPEAN PATENT APPLICATION

(11) **EP 4 169 717 A1**
(43) Date of publication of application: **26.04.2023**
(21) Application number: 22202764.1
(22) Date of filing: 20.10.2022
(51) Int. Cl.: B32B 37/00, B29C 65/48, B29C 65/52, B29C 65/00, B32B 37/06, B32B 37/10, B32B 37/12, B32B 37/18, B60R 13/02, B29L 31/30

(54) **METHOD OF MANUFACTURING HEADLINING USING MOISTURE-CURING ADHESIVE AND HEADLINING MANUFACTURED THEREBY**

(30) Priority: 25.10.2021 KR 20210142704
(71) Applicant: NVH Korea, Inc., Ulsan 44246 (KR)
(72) Inventor: OH, Chi Bong, 18480 Hwaseong-si, Gyeonggi-do (KR); RYU, Jong Hyun, 15596 Ansan-si, Gyeonggi-do (KR); LEE, Myung Sik, 16363 Suwon-si, Gyeonggi-do (KR)
(74) Representative: Zinkler, Franz

(57) **Abstract**

Disclosed herein is a method of manufacturing a headlining, using a moisture-curing adhesive that can be molded at a relatively low temperature and enables energy saving by not requiring a condition in which bonding surfaces are preheated to an excessively high temperature. A headlining manufactured thereby the same method is also disclosed. The method includes coating a fabric with a moisture-curing adhesive (S1), curing the moisture-curing adhesive by spraying water onto the moisture-curing adhesive (S2), forming a headlining member by putting the fabric coated with the moisture-curing adhesive on a substrate after the curing (S3), and pressing the headlining member so that the fabric and the substrate are bonded to each other and the headlining is shaped at the same time (S4), after the forming.

## Description

### BACKGROUND OF THE DISCLOSURE

### 1. Field of the Disclosure

The present disclosure relates to headlining, which is a vehicle component corresponding to the ceiling of the body of a vehicle. A headlining has functions of vehicle body protection and shock absorption as well as interior noise-reduction and decoration.

### 2. Description of the Related Art

Unless otherwise indicated herein, the contents described in this identification item are not related art to the claims of this application, and the description in this identification item is not admitted to be related art.

Headlining protects the body of a vehicle, absorbs shocks, and decorates the interior space of a vehicle. The headlining is mainly composed of a substrate and a fabric. In general, the substrate protects the vehicle as a frame, and the fabric decorates the interior of the vehicle by wrapping the substrate. Typically, the substrate, which is the frame of the vehicle roof, has a three-dimensional shape. Conventional headlinings have been manufactured by attaching an adhesive film to a preheated substrate and applying a fabric thereto. An adhesive of the conventional headlining is applied onto the three-dimensional substrate so that the adhesive layer mediating between the substrate and the fabric can be uniform.

For such an example, Korean Patent Application Publication No. 10-2001-0055370 (published on July 4, 2001) discloses a method of manufacturing an acoustic headliner for a vehicle, which includes a step of supplying lamination materials such that an adhesive and a glass mat, and an adhesive and a non-woven fabric can be sequentially stacked on the upper and lower surfaces of polyurethane foam, a step of preheating the supplied lamination materials to remove moisture contained in the materials, and a lamination step of attaching the lamination materials to the upper and lower surfaces of the polyurethane foam using rollers at the same time. Since the laminated materials are attached to the upper and lower surfaces of the polyurethane foam at the same time by a single lamination step, the manufacturing process is simplified and the sound absorption performance is improved. Also, since the lamination materials are attached without moisture, the adhesion between the components of the laminate may be enhanced.

As another example, Korean Patent Application Publication No. 10-2018-0050463 (published on May 15, 2018) discloses a method of manufacturing a molded article, which includes step "a" of preparing a laminated substrate by laminating a polypropylene foam paper, a semi-finished product A, a hot melt film, a foamed film, and a semi-finished product B, step "b" of transferring the laminated substrate to pass through between the upper and lower heating plates to undergo preheating, and step "c" of shaping and trimming the preheated laminated substrate. The semi-finished product A is a scrim prepared by mixing a first thermoplastic polymer and a natural fiber, unwinding entangled fibers through lateral and longitudinal carding operation and mixing the same together to form a continuous web in a sheet, and then needle-knitting the laminate in which a polyester non-woven fabric is laminated on the sheet, to make fibers and allowing the fibers to pass through a heat roller and a cooling roller. The foamed film includes thermally expandable capsules. The semi-finished product B is a scrim prepared by mixing a second thermoplastic polymer and a natural fiber, unwinding entangled fibers through lateral and longitudinal carding operation and mixing the same together to form a continuous web in a sheet, and then needle-knitting the laminate in which a polyester non-woven fabric is laminated on the sheet, to make fibers and allowing the fibers to pass through a heat roller and a cooling roller.

In the above manufacturing method, a separate preheating process is required to use the adhesive film, and excessive preheating is required to secure the adhesiveness of the adhesive film, which consumes a lot of energy. In addition, since processes of pressing and cooling are required to maintain the adhesive strength for a long time, the process takes a lot of time.

On the other hand, a moisture-curing adhesive refers to a type of adhesive in which moisture initiates the adhesion. The moisture-curing adhesive can be cured by moisture, so if necessary, the moisture-curing adhesive can be cured even at room temperature and can be used without excessively preheating a contact surface.

### Documents of Related Art

### [Patent Documents]

(Patent Document 1) Korean Patent Application Publication No. 10-2001-0055370 (published on July 4, 2001)
(Patent Document 2) Korean Patent No. 10-1383780 (published on April 10, 2014)

### SUMMARY OF THE INVENTION

The present disclosure is to provide a method of manufacturing a headlining using a moisture-curing adhesive that can be molded at a relatively low temperature and enables energy saving by not requiring a condition in which a contact surface is preheated to an excessively high temperature and to provide a headlining manufactured thereby.

Objectives of the present disclosure are not limited to the ones described above, and it is obvious that other objectives may be derived from the following description.

According to the present disclosure, one embodiment provides a method of manufacturing a headlining using a moisture-curing adhesive. The method includes: coating a fabric with a moisture-curing adhesive; curing the moisture-curing adhesive by spraying water onto the moisture-curing adhesive; forming a headlining member by putting the fabric coated with the moisture-curing adhesive on a substrate after the curing, and pressing the headlining member so that the fabric and the substrate are bonded to each other and the headlining member is shaped at the same time, after the forming.

According to the present disclosure, the coating may be performed in a manner of applying the moisture-curing adhesive to the fabric by a method of using rollers.

The headlining manufacturing method using a moisture-curing adhesive and the headlining manufactured by the method, according to embodiments of the present disclosure, are advantageous in that the manufacturing process is simplified and the process variation is reduced because a preheating step that is necessarily performed in a conventional manufacturing method is eliminated.

In addition, the use of the moisture-curing adhesive reduces an adhesive curing time, resulting in shortening the total manufacturing time.

In addition, since the moisture-curing adhesive is used, it is not necessary to preheat bonding surfaces to an excessively high temperature, the headlining can be shaped at a relatively low temperature, and energy can be saved.

The headlining manufacturing method using a moisture-curing adhesive and the headlining manufactured by the method according to embodiments of the present disclosure are advantageous in that the adhesive can be uniformly applied onto the fabric through direct application, so that the adhesive strength between the fabric and the substrate is increased.

In addition, due to the excellent adhesion strength between the fabric and the substrate, the fabric may not easily peel off from the substrate, and thus the headlining may have an excellent durability.

Effects of the present disclosure are not limited to the effects mentioned above, and other effects not mentioned will be clearly understood by those skilled in the art from the description of the claims.

### BRIEF DESCRIPTION OF THE DRAWINGS

FIG. 1 is a flowchart illustrating a headlining manufacturing method using a moisture-curing adhesive, according to an embodiment of the present disclosure;
FIG. 2 is a diagram illustrating positions of specimens in a peel strength test;
FIG. 3 is a graph showing experimental values of peel strength of a headlining manufactured by a conventional headlining manufacturing method; and
FIG. 4 is a graph showing experimental values of peel strength of a headlining manufactured by a headlining manufacturing method using a moisture-curing adhesive, according to an embodiment of the present disclosure.

### DESCRIPTION OF THE PREFERRED EMBODIMENTS

Hereinafter, with reference to the accompanying drawings, the configuration and effects of preferred embodiments of the disclosed contents will be described. For reference, in the following drawings, each component is omitted or schematically illustrated for convenience and clarity, and the size of each component does not reflect the actual size. In addition, the same reference numerals refer to the same components throughout the specification, and reference numerals for the same components in individual drawings will be omitted.

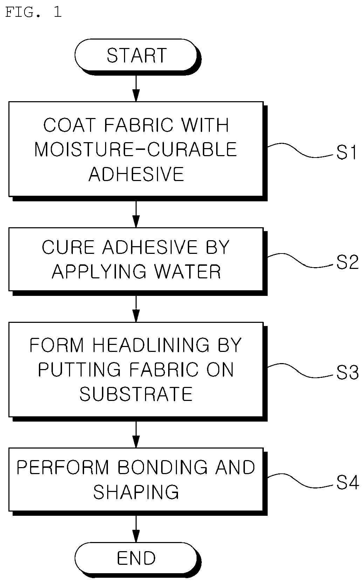

As illustrated in FIG. 1, a headlining manufacturing method using a moisture-curing adhesive, according to one embodiment of the present disclosure, includes a first step S1 of coating a fabric with a moisture-curing adhesive, a second step S2 of curing the moisture-curing adhesive by spraying water onto the moisture-curing adhesive, a third step S3 of forming a headlining member by putting the fabric coated with the moisture-curing adhesive on a substrate after the second step S2, and a fourth step S4 of pressing the headlining member so that the fabric and the substrate are bonded to each other and the headlining member is shaped at the same time after the third step S3.

In the first step S1, the fabric is coated with the moisture-curing adhesive. The adhesive is directly applied onto the fabric rather than the substrate to increase the adhesion strength between the fabric and the substrate in the first step S1. When the adhesive is applied onto the fabric rather than the substrate, the adhesive can be uniformly applied. For this reason, the adhesion strength between the fabric and the substrate can be increased. In addition, since the adhesion strength between the fabric and the substrate is increased, the headlining can be shaped at a lower temperature in the fourth step S4 than a conventional headlining.

The adhesive Is a moisture-curing adhesive. The moisture-curing adhesive refers to an adhesive of which the curing is initiated by moisture or humidity. The disclosed moisture-curing adhesive may also include a moisture-curing thermosetting adhesive. The moisture-curing thermosetting adhesive refers to an adhesive that can be cured by moisture or heat.

The moisture-curing adhesive takes a shorter time for curing than a typical thermosetting adhesive. Therefore, the headlining manufacturing method using a moisture-curing adhesive, provided by the present disclosure, can reduce the headlining manufacturing time compared to the conventional method. In addition, since the use of a moisture-curing adhesive eliminates a preheating step and a post-molding pressing step that are essential in conventional methods, the manufacturing process can be simplified and the process variation can be reduced. In addition, the use of the moisture-curing adhesive enables energy saving by not requiring a condition in which bonding surfaces are preheated to an excessively high temperature. Moreover, when the moisture-curing adhesive is used, the usage of the adhesive can be reduced compared to the case where a general thermosetting adhesive is used. This results in saving in headlining production costs.

The moisture-curing adhesive is preferably applied by a method of using rollers. Applying an adhesive by a method of using rollers refers to uniformly applying the adhesive onto the fabric using three rollers. A first roller rotates in mesh with a second roller while being immersed in a liquid adhesive so that the adhesive is uniformly spread by the first and second rollers. A third roller rotates in mesh with the second roller, in which the fabric is positioned between the second and third rollers. When the fabric passes between the second roller and the third roller, the adhesive is uniformly applied. Preferably, the moving direction of the fabric is the same before and after passing the second and third rollers. By using the rollers, the process equipment in the first step S1 can be simplified. In the same way as above, the adhesive can be uniformly applied to the fabric. The first, second, and third rollers may be each independently made of metal or rubber.

In the first step S1, an amount of the moisture-curing adhesive applied is preferably in a range of 10 g/m² to 100 g/m², and more preferably, 20 g/m² to 40 g/m². When the amount of adhesive applied is less than 10 g/m², the fabric and the substrate cannot be effectively adhered to due to a smaller amount of the adhesive than required and thus can be easily separated. On the other hand, when the amount of adhesive applied exceeds 100 g/m², the curing time of the adhesive increases, and thus the processing time may increase. In the fourth step S4, the adhesive may ooze between the fabric and the substrate, resulting in uneven finishes. When considering the effective adhesive strength between the fabric and the substrate and the process efficiency, the amount of the adhesive applied is preferably in the range of 20 g/m² to 40 g/m².

Preferably, the moisture-curing adhesive has a viscosity in a range of 50 cps to 1000 cps at a temperature in a range of 40°C to 60°C, and more preferably, 100 cps to 500 cps. When the viscosity of the moisture-curing adhesive is less than 50 cps at a temperature in the range of 40°C to 60°C, the adhesive may ooze from the edges, or the fabric may wrinkle after bonding the fabric and the substrate. When the viscosity of the moisture-curing adhesive exceeds 1000 cps at a temperature in the range of 40°C to 60°C, the adhesive may not be uniformly applied to the fabric.

The moisture-curing adhesive may be made of any one of polyester-based, polyether-based, polyurethane-based, epoxy-based, silicone-based, and acryl-based materials.

The moisture-curing adhesive may include 30 to 40 parts by weight of polyol, 50 to 60 parts by weight of 4,4'-diphenyl methane diisocyanate, and 5 to 10 parts by weight of ethylene glycol as a chain extender. The moisture-curing adhesive may also be made by mixing the octanoate of DBU (1,8-diazabicyclo[5,4,0]undec-7-ene) as a co-catalyst and dibutyltin dilaurate as a catalyst.

When the moisture-curing adhesive is made of polyester-based material, the polyol may be one selected from the group consisting of polyethylene adipate, polybutylene adipate, polyhexylene adipate, and polydiethylene glycol adipate. When the moisture-curing adhesive is made of polyether-based material, the polyol may be one selected from the group consisting of polypropylene glycol and polyethylene glycol.

In the second step S2, the moisture-curing adhesive is cured by applying water onto the upper portion of the moisture-curing adhesive and preferably, water is sprayed onto the moisture-curing adhesive. When the application of the water is performed in another way without spraying water, it may not be preferable since it is difficult to control the amount of water precisely.

In the second step S2, an amount of water applied onto the moisture-curing adhesive is preferably in a range of 5 g/m² to 100 g/m². When the amount of water applied is less than 5 g/m², the moisture-curing adhesive cannot be cured effectively since the amount of water is not enough to cure the adhesive. On the other hand, when the amount of water applied exceeds 100 g/m², the fabric can get wet due to the excessive amount of water. In order to cure the moisture-curing adhesive effectively without the fabric getting wet, the amount of water applied is preferably in the range of 5 g/m² to 100 g/m².

In the third step S3, the headlining member is formed by putting the adhesive-coated fabric on the substrate. The adhesive-coated fabric is put on the substrate to properly adjust the adhesive position before bonding the fabric and the substrate.

In the third step S3, the fabric is turned upside down while being put on the substrate so that one side of the fabric on which the moisture-curing adhesive is applied faces toward the substrate surface. By turning the fabric upside down and putting the same on the substrate, operators can work without touching the adhesive.

In fourth the step S4, the headlining member is pressed to bond the fabric and the substrate and shape the headlining member. The substrate and the fabric coated with laminated adhesive in the third step S3 are pressed on both sides in the fourth step S4 to bond to each other while shaping the headlining member at the same time.

Preferably, the fourth step S4 is performed under a condition of temperature in a range of 90°C to 150°C. When the temperature in the fourth step S4 is lower than 90°C, the bonding and the shaping cannot be efficiently performed, and the water used in the second step S2 may still remain in a liquid state. On the other hand, when the temperature in the fourth step S4 is higher than 150°C, the viscosity of the moisture-curing adhesive is decreased, so that the headlining member cannot have clean edge finishes at the end, and the original properties of the fabric and the substrate cannot be maintained.

Although the molding temperature in the conventional art is required to be higher than 150°C, molding can be performed even under the condition of temperature in the range of 90°C to 150°C according to the disclosed method of manufacturing the headlining using the moisture-curing adhesive. Also, molding at a relatively low temperature enables energy saving.

Furthermore, in the conventional method, a process of pressing while cooling after the molding is required. However, in the disclosed method of manufacturing the headlining using the moisture-curing adhesive, a process after the molding is not separately required, thereby simplifying the process and shortening the processing time.

[Table 1] below represents a comparison between the existing process and the disclosed process of manufacturing the headlining using the moisture-curing adhesive. In the disclosed method of manufacturing the headlining using the moisture-curing adhesive, processes of preheating and pressing can be omitted after the molding, thereby simplifying the process. Also, the headlining manufactured by the disclosed method of manufacturing the headlining using the moisture-curing adhesive has a higher adhesion strength between the fabric and the substrate than the headlining manufactured by the existing process.

**[Table 1]**

| Classific ation | Lami fabric | Adhesive coating | Preheating fabric and substrate | Heat-bonding | Pressing (cooling) | Adhesive strength |
|---|---|---|---|---|---|---|
| Existing process | O | X | O | O | O | About 11 N |
| Disclosed process | X | O | X | O | X | About 15 N |

### Experiment 1. Comparison test of peel strength

The following is an experiment measuring the peel strength values of a headlining manufactured using a thermosetting adhesive and a headlining manufactured by the manufacturing method using a moisture-curing adhesive.

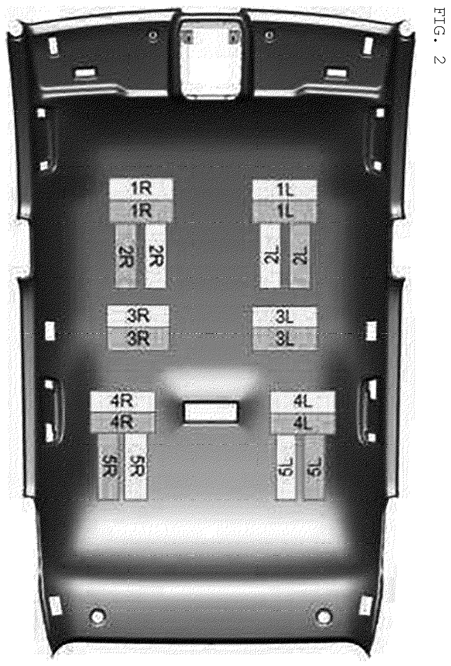

A headlining using the moisture-curing adhesive and a headlining using a conventional thermosetting adhesive were prepared. As illustrated in FIG. 2, each prepared headlining was cut into a specimen having a width of 25 mm. In Experiment 1, the peel strength of each specimen was measured according to ASTM D903 standard.

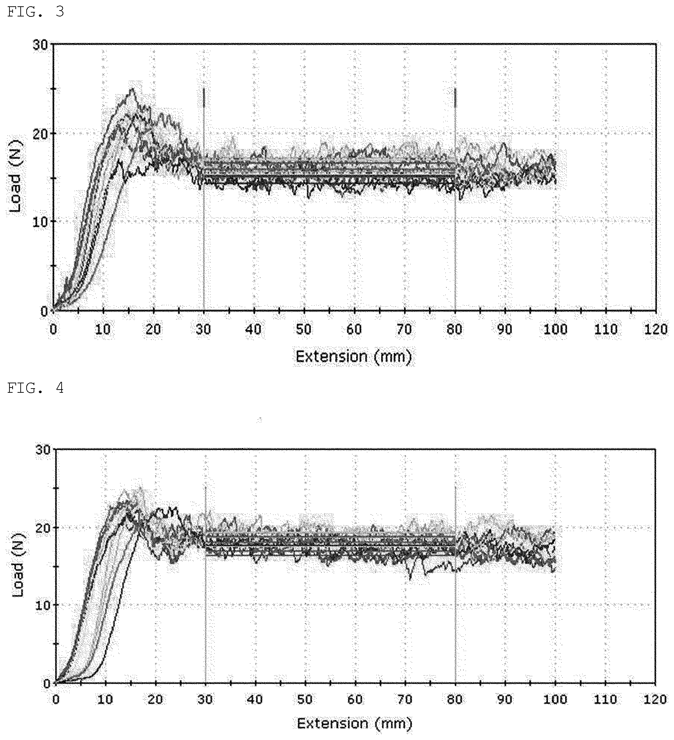

The peel strength values of the headlining using the conventional thermosetting adhesive are shown in [Table 2], which are shown graphically in FIG. 3.

The peel strength values of the headlining using the moisture-curing adhesive are shown in [Table 3], which are shown graphically in FIG. 4.

**[Table 2]**

| Headlining using thermosetting adhesive | | | | | | | | |
|---|---|---|---|---|---|---|---|---|
| Peel strength (N/mm) | No. | 40 mm | 50 mm | 60 mm | 70 mm | 80 mm | 90 mm | Average |
| | 1-1 | 15.26 | 13.93 | 15.18 | 13.77 | 15.18 | 13.99 | 14.55 |
| | 1-2 | 15.64 | 15.14 | 14.93 | 13.43 | 14.21 | 15.05 | 14.73 |
| | 2-1 | 17.55 | 15.64 | 17.15 | 18.64 | 15.99 | 18.31 | 17.21 |
| | 2-2 | 16.94 | 17.30 | 17.49 | 17.54 | 18.02 | 17.75 | 17.51 |
| | 3-1 | 15.06 | 15.00 | 15.89 | 16.69 | 16.12 | 14.30 | 15.51 |
| | 3-2 | 16.68 | 16.18 | 16.66 | 16.39 | 14.40 | 15.72 | 16.01 |
| | 4-1 | 14.54 | 16.18 | 14.98 | 15.57 | 15.37 | 14.26 | 15.15 |
| | 4-2 | 13.78 | 14.46 | 14.56 | 13.85 | 14.80 | 14.46 | 14.32 |
| | 5-1 | 16.44 | 18.11 | 15.37 | 16.83 | 17.63 | 16.80 | 16.86 |
| | 5-2 | 16.97 | 15.80 | 14.91 | 16.45 | 15.19 | 15.97 | 15.88 |
| Classification | | AVG | | | | | | 15.77 |

**[Table 3]**

| Headlining using moisture-curing adhesive | | | | | | | | |
|---|---|---|---|---|---|---|---|---|
| Peel strength (N/mm) | No. | 40 mm | 50 mm | 60 mm | 70 mm | 80 mm | 90 mm | Average |
| | 1-1 | 17.28 | 16.90 | 18.14 | 17.40 | 16.40 | 16.60 | 17.12 |
| | 1-2 | 18.20 | 17.06 | 17.21 | 16.82 | 16.25 | 14.40 | 16.66 |
| | 2-1 | 19.71 | 19.22 | 20.29 | 19.09 | 17.87 | 20.23 | 19.40 |
| | 2-2 | 19.89 | 18.24 | 17.71 | 17.36 | 18.37 | 18.56 | 18.36 |
| | 3-1 | 17.30 | 18.26 | 17.74 | 18.30 | 17.94 | 17.30 | 17.81 |
| | 3-2 | 18.95 | 16.05 | 16.90 | 18.19 | 17.37 | 19.10 | 17.76 |
| | 4-1 | 16.62 | 17.21 | 17.31 | 17.11 | 17.23 | 16.84 | 17.05 |
| | 4-2 | 18.11 | 18.55 | 16.61 | 17.72 | 18.47 | 16.75 | 17.70 |
| | 5-1 | 20.67 | 19.83 | 18.74 | 18.09 | 18.44 | 17.68 | 18.91 |
| | 5-2 | 19.36 | 19.04 | 20.11 | 18.93 | 18.77 | 19.20 | 19.24 |
| Classification | | AVG | | | | | | 18.00 |

The greater the adhesion strength between a fabric and a substrate, the greater the peel strength value. The average peel strength value of the headlining using the conventional thermosetting adhesive was 15.77 N/mm, and the average peel strength value of the headlining using the moisture-curing adhesive was 18.00 N/mm. Indicated is that the headlining using the moisture-curing adhesive has a greater adhesion strength between the fabric and the substrate than the headlining using the conventional thermosetting adhesive.

### Experiment 2. Comparison test of curing time

The following is an experiment comparing the curing time of an adhesive in a conventional method of manufacturing a headlining using a thermosetting adhesive and the method of manufacturing a headlining using a moisture-curing adhesive.

A headlining using the moisture-curing adhesive and a headlining using a conventional thermosetting adhesive were prepared. As illustrated in FIG. 2, specimens were each independently prepared by cutting each prepared headlining. In Experiment 2, the peel strength per hour of each specimen was measured according to ASTM D903 standard. The peel strength values per hour of the headlining using the moisture-curing adhesive and the headlining using the conventional thermosetting adhesive are shown in [Table 4].

**[Table 4]**

| | | | | | | |
|---|---|---|---|---|---|---|
| Time (sec) | 20 | 30 | 40 | 50 | 60 | 70 |
| Thermosetting adhesive | 3.18 | 3.07 | 10.56 | 13.24 | 16.65 | 17.51 |
| Moisture-curing adhesive | 8.394 | 16.452 | 18.345 | 18.56 | 19.10 | 18.43 |

In Experiment 2, the longer the time it takes for the peel strength to reach a certain level, the longer the curing time. The Headlining using the thermosetting adhesive shows a constant peel strength value after 60 seconds, and the headlining using the moisture-curing adhesive shows a constant peel strength value after 40 seconds. Indicated is that the curing time of headlining using the moisture-curing adhesive is shorter than that of headlining using the conventional thermosetting adhesive.

While the preferred embodiments of the present disclosure have been described above with reference to the accompanying drawings, the embodiments described in the present specification and the configurations shown in the drawings are only the most preferred embodiments of the present disclosure and represent all of the technical spirits of the present disclosure. It should be understood that there may be various equivalents and modifications that can replace them at the time of application. Therefore, the embodiments described above are to be understood in all respects as illustrative and not restrictive, and the scope of the present disclosure is indicated by the appended claims rather than the detailed description. All changes or modifications derived from the meaning and scope of the claims and the concept of equivalents should be construed as being included in the scope of the present disclosure.

## Claims

1. A method of manufacturing a headlining by using a moisture-curing adhesive, the method comprising:
applying the moisture-curing adhesive onto a first surface of a fabric;
spraying water to an upper surface of the moisture-curing adhesive to cure the moisture-curing adhesive;
placing the fabric on a substrate such that the first surface coated with the moisture-curing adhesive faces the substrate; and
pressing the fabric and the substrate so that the fabric and the substrate are bonded to each other and a headlining member is formed at the same time.

2. The method of claim 1, wherein in the applying of the moisture-curing adhesive, a roller is used to apply the moisture-curing adhesive.

3. The method of claim 1, wherein in the applying of the moisture-curing adhesive, the moisture-curing agent is applied in an amount in a range of 10 g/m² to 100 g/m².

4. The method of claim 1, wherein in the spraying of the water, the water is sprayed in an amount in a range of 5 g/m² to 100 g/m².

5. The method of claim 1, wherein in the pressing of the fabric and the substrate, a temperature is set in a range of 90°C to 150°C.

6. The method of claim 1, wherein the moisture-curing adhesive has a viscosity in a range of 50 cps to 1000 cps at temperatures of 40°C to 60°C.

7. The method of claim 1, wherein the moisture-curing adhesive is made of any one of polyester-based, polyether-based, polyurethane-based, epoxy-based, silicone-based, and acryl-based materials.

8. A headlining manufactured by the method of any one of claims 1 to 7.
